# EUROPEAN PATENT SPECIFICATION

(11) **EP 3 454 259 B1**
(45) Date of publication and mention of the grant of the patent: **23.11.2022**
(21) Application number: 18194129.5
(22) Date of filing: 12.09.2018
(51) Int. Cl.: G06N 3/00, G06N 3/04, G06N 3/08

(54) **AUTONOMOUS AGENT SYSTEM**
AUTONOMES AGENTENSYSTEM
SYSTÈME D'AGENT AUTONOME

(30) Priority: 12.09.2017 GB 201714667
(43) Date of publication of application: 13.03.2019
(73) Proprietor: Camlin Technologies Limited, Lisburn, County Antrim BT28 2EX (GB)
(72) Inventor: MASTROLEO, Marcello, Lisburn, County Antrim BT28 2EX (GB)
(74) Representative: FRKelly

(56) References cited:
- US-A1- 2016 232 445
- Arun Nair ET AL: "Massively Parallel Methods for Deep Reinforcement Learning", , 16 July 2015 (2015-07-16), pages 1-14, XP055280349, Retrieved from the Internet: URL:http://arxiv.org/pdf/1507.04296v2.pdf [retrieved on 2016-06-14]
- R Matthew Kretchmar: "Parallel Reinforcement Learning", , 31 May 2002 (2002-05-31), XP055547979, Retrieved from the Internet: URL:http://citeseerx.ist.psu.edu/viewdoc/d ownload?doi=10.1.1.132.6788&rep=rep1&type= pdf [retrieved on 2019-01-28]
- MU LI ET AL: "Scaling Distributed Machine Learning with the Parameter Server", PROCEEDINGS OF THE 2014 INTERNATIONAL CONFERENCE ON BIG DATA SCIENCE AND COMPUTING, BIGDATASCIENCE '14, 1 January 2014 (2014-01-01), pages 1-1, XP055547540, New York, New York, USA DOI: 10.1145/2640087.2644155 ISBN: 978-1-4503-2891-3

## Description

### Field of the Invention

The present invention relates to systems of autonomous agents. The invention relates particularly to computer-implemented modelling in a network of autonomous agents.

### Background to the Invention

Autonomous agents are becoming more prevalent in everyday life. Nevertheless, where autonomous agents need to update themselves by abstracting relevant information from data, several problems arise mainly concerned with costs and reliability. In this context costs are meant both in terms of power needed to keep their models updated and in terms of communication bandwidth needed to share experience among agents; while reliability is linked to the risk that under unknown circumstances the autonomous model updating process can generate incorrect agent behaviour thus creating a potential risk for the environment in which the agent is performing. Power costs are for example influenced by the optimization process of finding or adapting the parameters of a tunable model using the available data. Model fitting is at the core of any machine learning or artificial intelligence system and it is generally the most expensive aspect in terms of computational resources thus in terms of both power and time.

The computational effort needed to fit a model is proportional to a power, greater than or equal to one, of the number of data samples that are o be learned. Thus, the cost of model fitting on data is considerable in applications where the amount of data tends to rapidly grow. For example, if a model exhibits a quadratic dependence between the amount of training data and the training time then, whenever the amount of training data doubles, the time needed to train the model increases by a factor of 4. Also, adaptive training techniques that update an already trained model as new data becomes available increase the overall cost of computation, even if they better distribute it over time.

Knowledge transfer across agents is also an important factor. Transferring data samples is not efficient because each agent then pays the price of retraining itself on the transferred data. Transferring models that are already adapted to data samples may on the other hand generate conflicts between different model interpretations.

Another concern relates to the probability that a system which automatically adapts the way it interacts with the environment can accidentally override some security constraints thus compromising the environment in which it performs. Even if this kind of risk can be mitigated with specific security oriented designs, a general purpose solution to contain this risk regardless of the specific applicative context is still missing.

It would be desirable to mitigate the problems outlined above.

A paper entitled "Massively Parallel Methods for Deep Reinforcement Learning" by Arun Nair et al, presented at the Deep Learning Workshop, International Conference on Machine Learning, Lille, France, 2015, discloses a distributed architecture for deep learning comprising parallel actors, parallel learners, a distributed neural network and a distributed store of experience.

### Summary of the Invention

The invention is set out in independent claim 1, which relates to a computing system. Preferred aspects of the invention are set out in the dependent claims.

### Brief Description of the Drawings

An embodiment of the invention is now described by way of example and with reference to the accompanying drawings in which:
FIG. 1 is a block diagram of a computer-implemented data modelling system embodying one aspect of the invention, the system including autonomous agents interacting with a central modelling system exposing a data storage interface and a behaviourally secure modelling system interface;
FIG. 2 is a more detailed block diagram of an embodiment of the central modelling system;
FIG. 3 is a block diagram of data models and a feature extractor component;
FIG. 4 is a block diagram of a central memory component with a topological component;
FIG. 5 is a block diagram illustrating the central modelling system's data storage interface and the flows to log and retrieve data form the central memory;
FIG. 6 is a block diagram illustrating a modelling engine component with a detail of a model training component;
FIG.7 is a block diagram illustrating a behaviour default prevention support system within the central modelling system, with details of a polling system and data and model revision flows;
FIG. 8 is a block diagram illustrating the behaviourally secure modelling system interface with details of a data modelling interface workflow;
FIG. 9 is a block diagram of an embodiment of an autonomous agent;
FIG. 10 is a block diagram illustrating the agents' interactions with the central modelling system to log their data;
FIG. 11 illustrates an example of the flows within the central modelling system in response to the request of a new model made by an agent;
FIG. 12 is a block diagram illustrating a central modelling system with a continuous learning component and how knowledge can be gained from experts regardless of the agent's experience;
FIG. 13 is a block diagram illustrating an optional extension of the modelling engine which allows storage and retrieval of trained models; and
FIG. 14 illustrates the system configured to achieve continuous learning and to forcibly update autonomous agents model.

### Detailed Description of the Drawings

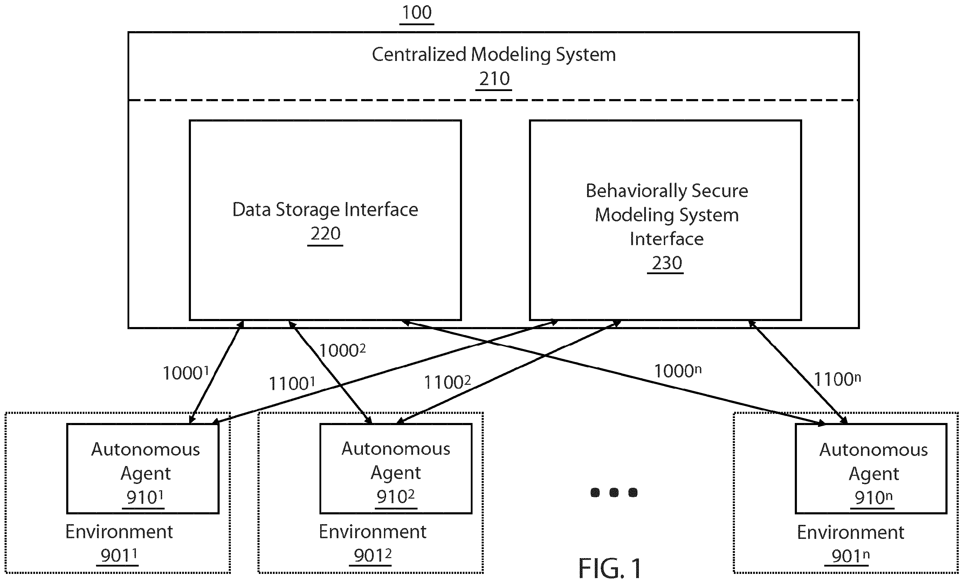

Referring now in particular to FIG. 1 of the drawings, there is shown an autonomous agent system 100 embodying one aspect of the invention. The system 100 comprises a central modelling system 210 that exposes a data storage interface 220 and preferably a behaviourally secure modelling interface 230. The system 100 also includes at least one but typically a plurality of autonomous agents 910, each one being exposed to a respective environment 901. The agents 910 and the central modelling system communicate with one another across any convenient telecommunications network(s).

Each agent 901 may be exposed to a different respective environment 901, or any two or more agents 910 may be exposed to the same environment 901. The agents 910 interact with the central modelling system 210 by means of any one or both of its exposed interfaces 220, 230, using any convenient respective interaction protocol(s) supported by interfaces 220, 230. The protocols may be the same or different as is convenient. The central modelling system 210 and the interaction protocols jointly contribute to solve the cost and the reliability problems in an autonomous agent framework, as is embodied by the plurality of agents 910 in this instance.

As would be apparent to a skilled person, the central monitoring system 210 may be implemented by one or more computers running appropriately configured computer software. The interfaces and protocols may comprise any suitable type of computer-usable interface or computer-usable protocols.

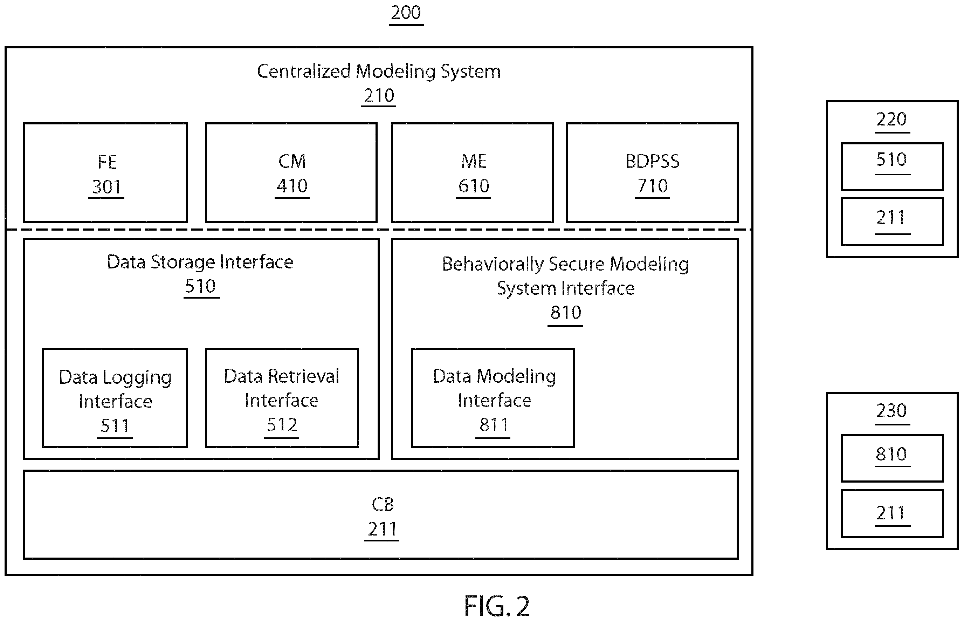

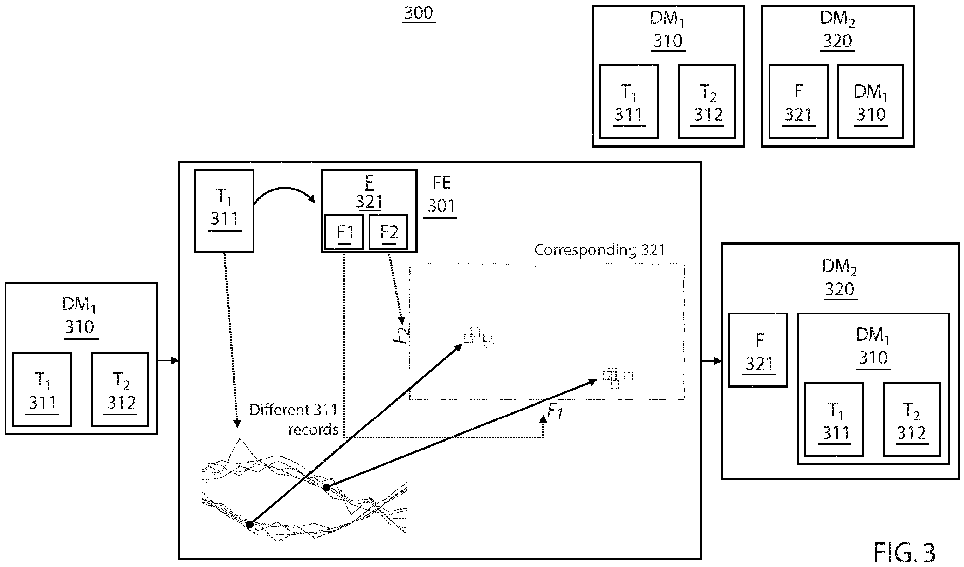

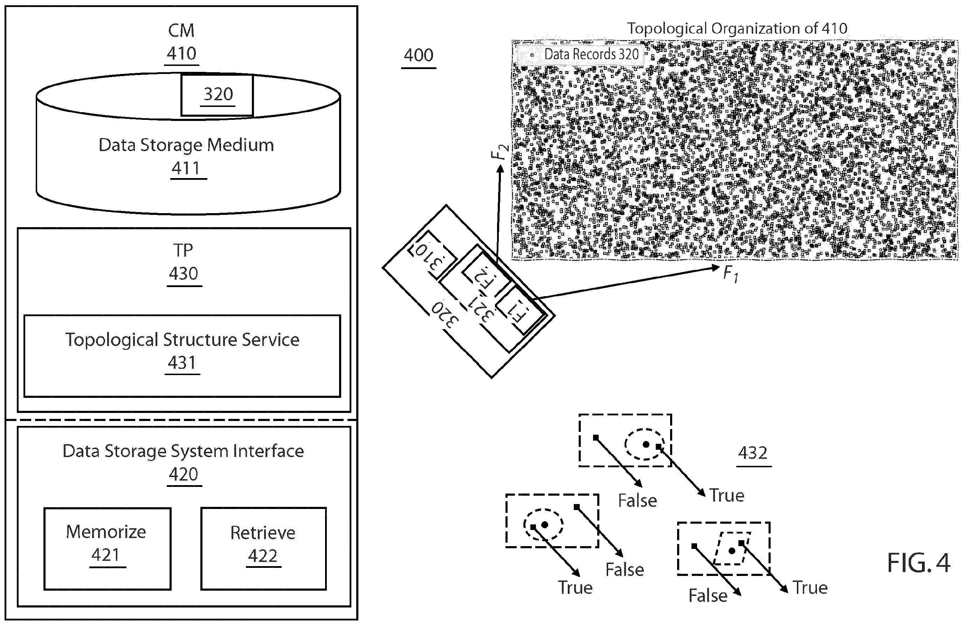

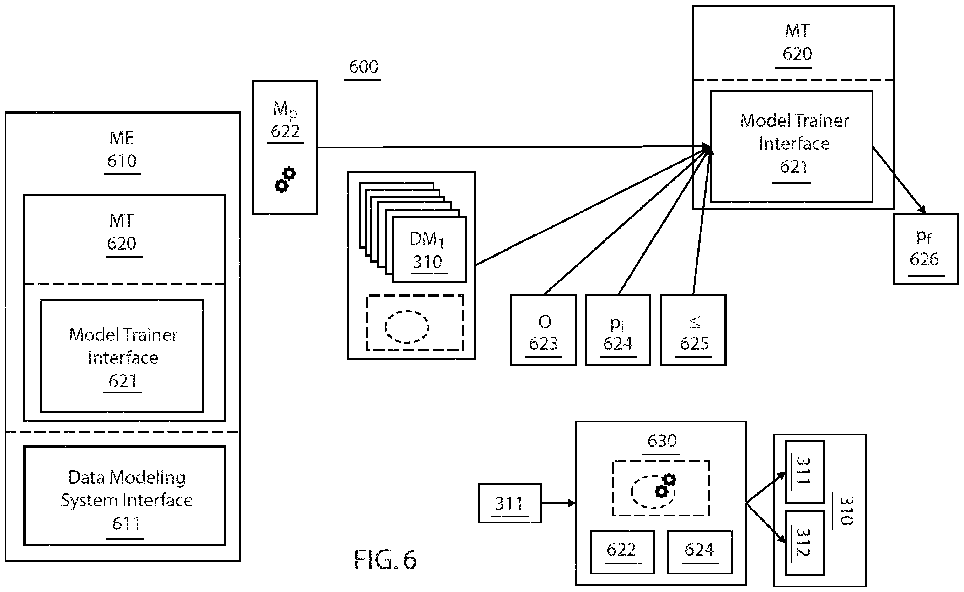

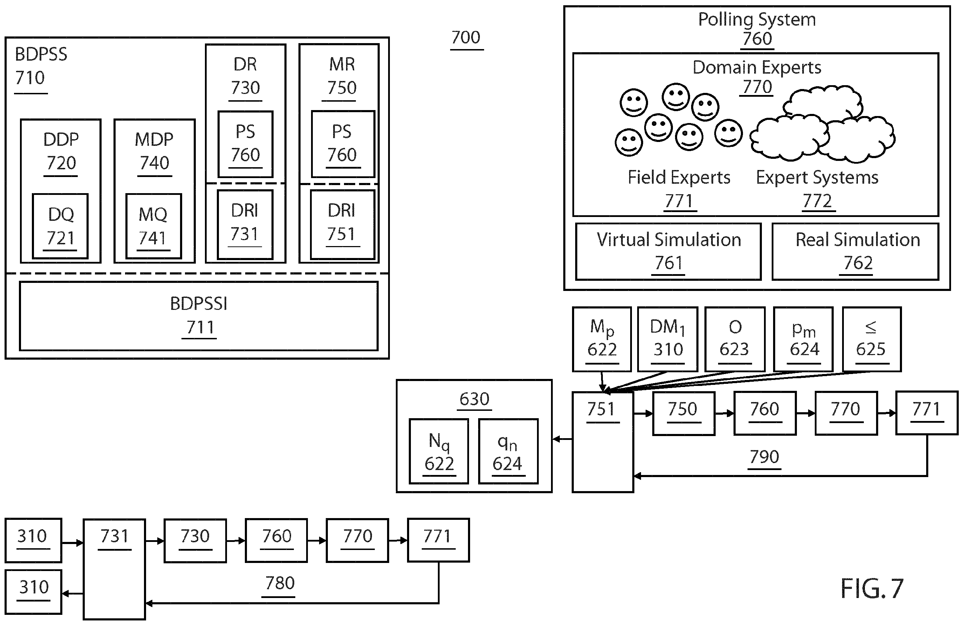

Referring now in particular to FIG. 2, the central modelling system 210 is configured to perform at least data storage functionality, and preferably also behaviourally secure modelling functionality, each functionality being exposed to the agents 910 by means of the respective interface 220, 230. More particularly, the preferred central modelling system 210 comprises: a feature extraction component FE 301 (illustrated in more detail in FIG. 3), a central memory component CM 410 (illustrated in more detail in FIG. 4), a modelling engine component ME 610 (illustrated in more detail in FIG. 6), and a behavioural default prevention support system BDPSS 710 (illustrated in more detail in FIG. 7).

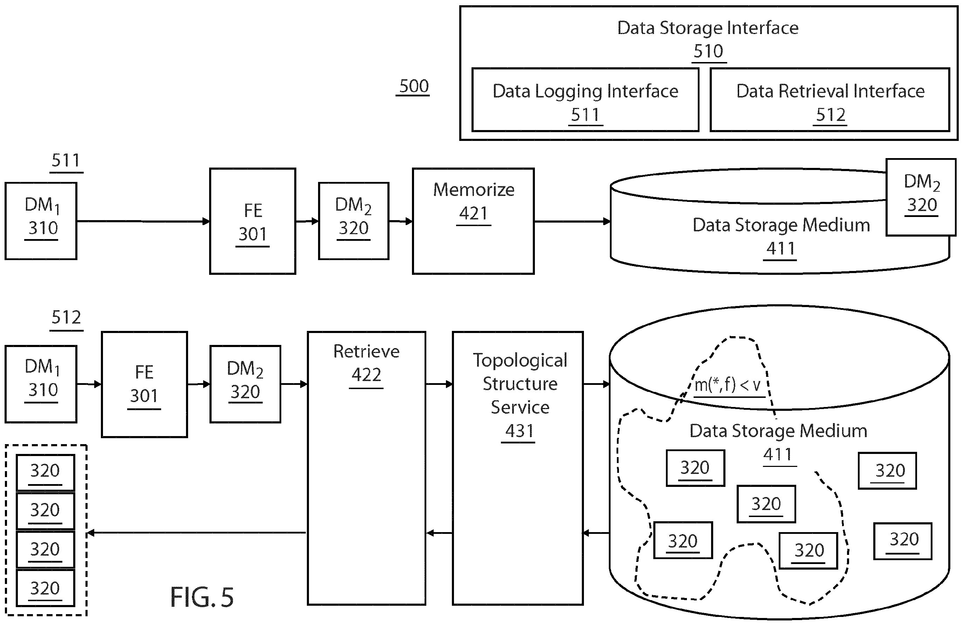

The data storage interface 220 (illustrated in more detail in FIG. 5) provides access to the feature extraction component FE 301, and to the central memory component CM 410. In FIG. 2, the interface 220 is comprised of interface component 510 and communication component 211. The data storage interface component 510 comprises a data logging interface component 511 which enables storage of data within the central memory CM 410 and a data retrieval interface component 512 which enables retrieval of stored data from the central memory CM 410.

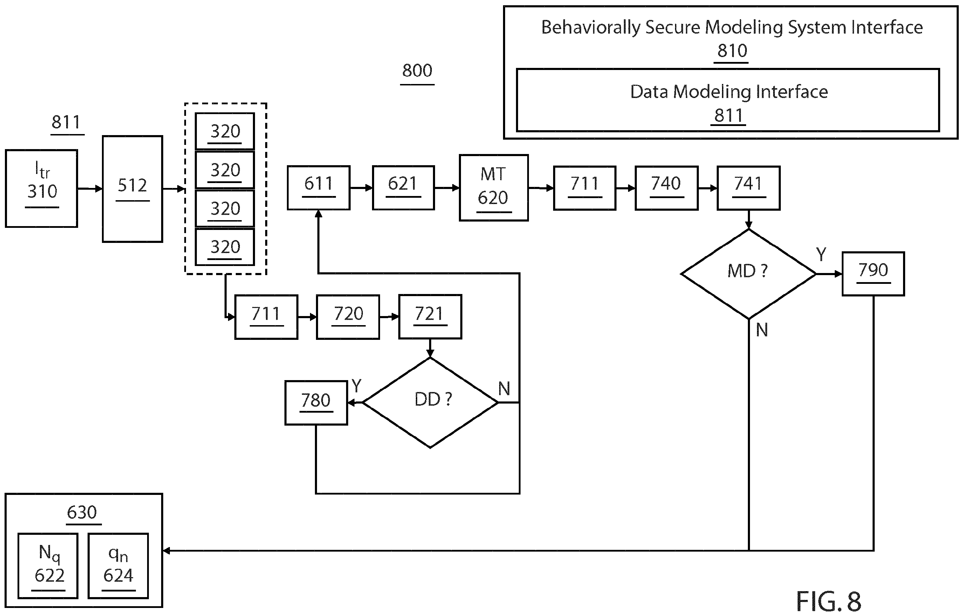

The behaviourally secure modelling interface 230 (illustrated in more detail in FIG. 8) provides access to the modelling engine component ME 610, and to the behavioural default prevention support system BDPSS 710. In FIG. 2, the interface 230 is comprised of interface component 810 and communications component 211. The behaviourally secure modelling interface component 810 comprises a data modelling interface component 811.

The interfaces 220, 230 exposed by the central modelling system 210 are accessible by the agents 910 through one or more communication channels, which may be cryptographically secured by any conventional means. In the illustrated embodiment, all the necessary functionalities needed to support the communication channels are provided by the communication component CB 211.

The central modelling system 210 eliminates or at least reduces training costs associated with the agents 910. Moreover, the provision of a central modelling system 210 that is responsible for changing the agents' 910 behaviour allows checking and quality control of agent behaviour, thereby preventing or reducing damage to the respective environment caused by the agents.

Referring now in particular to FIG.3 interactions between the agents 910 and the central modelling system 210 through the data storage interface 220 involves the exchange of data, e.g. in the form of data records or data samples, compliant with a first data model (or structure) DM1, i.e. capable of being represented by the first data model DM1. The data model DM₁ comprises at least a first type T1 of data and optionally a second type T2 of data different from the first type T1. Therefore, data compliant with data model DM1 comprises a first data element of data type T₁ and optionally a second data element of data type T2. In this context a data record may for example comprise data obtained from a database, while a data sample may comprise data produced by a sensor, e.g. a measurement.

A second data model (or structure) DM2 is used within the central modelling system 210, DM2 comprising first and second different types of data, the first type being of type F and the second type being compliant with data model DM1, i.e. comprising data capable of being represented by data model DM1. For data model DM2 both data types are mandatory. Therefore, data compliant with data mode DM2 comprises a first data element of data type F and a second data element that is compliant with data model DM1.

In the present context the data models DM1, DM2 may be regarded as structures or formats for the respective data types. Any data types may be used to create data conforming to the models. For example, the data type may be a data sample measured by a sensor, or a data record from a database, or data extracted from an electronic file. In preferred embodiments, the type of the data indicates the semantics of the data rather than the format of the data.

Data type T1 may be any data type that is suitable for use as an input to a mathematical or computational model, and typically also for use as an output of a mathematical or computational model. By way of example, data type T1 may comprise data representing a measurement or other detection made by a sensor (sensor output data), or data representing one or more aspects of the status of an agent 901 or data representing one or more actions taken by an agent 901.

Data type T2 is preferably a type that is suitable for use as an output of a mathematical model, but is typically not suitable for use as an input to the mathematical model. For example, data type T2 may comprise data determining or indicating how an agent interacts with its environment (e.g. control data for the agent or profile data for the agent).

Data type F is a type that is the result of data processing of data type T1, namely feature extraction data. As is described in more detail hereinafter, feature extraction data may be used to organise semantic memory in preferred embodiments.

By way of example, a mathematical model implemented by the system may take data of type T1 as an input and produce data of type T2 as an output (this may for example be the case in a supervised learning scenario); a mathematical model implemented by the system may take data of type T1 as an input and produce data of type T1 as an output (this may for example be the case in an unsupervised learning scenario and/or a data filtering scenario); a mathematical model implemented by the system may take data of type T1 as an input and produce data of types T1 and T2 as an output (this may for example be the case in a supervised data filtering scenario).

Data compliant with data model DM2 may be said to comprise an extended version of the corresponding data that is compliant with data model DM1, i.e. comprising data compliant with data model DM1 and data of type F that have been extracted from the T1 type data of the DM1 model. The provision of data of type F allows the central modelling system to have semantic capabilities, for example because the type F data may comprise variables connecting data samples to their meaning. It is possible for data type F to be a subset of data type T1.

Upon receiving by way of input a data record 310 compliant with data model DM1, the feature extraction component FE 301 returns a data record 320 compliant with the data model DM₂ by transforming the T₁ compliant part of DM₁ into data of type F and extending the original DM₁ compliant record with the corresponding data of type F. The transformation of T1 type data into F type data involves feature extraction. Any conventional feature extraction algorithm(s) may be used for this purpose. In this context the term feature extraction is intended to embrace any data processing technique capable of producing data (feature(s)) that is indicative of one or more characteristics of the data being processed. The extracted feature(s) (characteristics) can then be used to assess the similarity of data records.

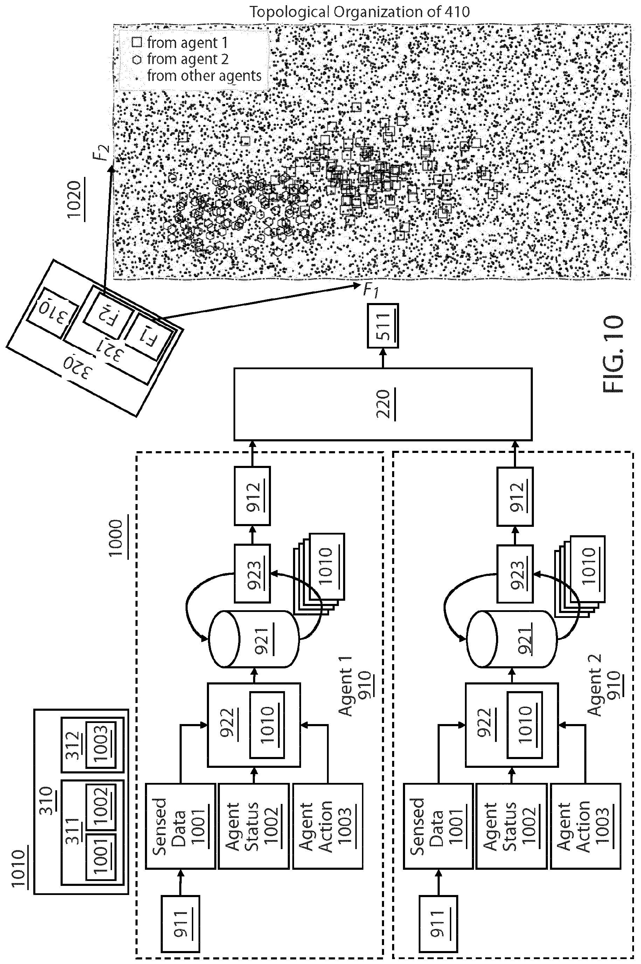

Figure 3 illustrates a plurality of data of type T1 (311) being transformed into corresponding transformed data of type F (321) by the feature extractor 301. In this example, data of type T1 are organized into groups such that any two data from the same group are more similar than any two data taken from different groups. The corresponding transformed data 321 are similarly arranged in groups. In Figure 3, 10 data samples of type T1 are arranged into 2 groups of 5 samples each, and the same holds for the corresponding transformed F type samples 321. Arranging the data into groups is preferred for facilitating operation of the CM 410. In this example, each transformed data sample/record 321 is assumed to comprise first and second features, F1 and F2. More generally, the transformed data 321 may comprise one or more features. Each feature may be numeric but need not necessarily be so (e.g. it may be alphanumeric, or conform with any relevant code). More generally, each feature comprises data representing one or more characteristics of the type T1 data. Advantageously, each feature comprises data representing the semantics, or meaning, of the type T1 data.

Referring now in particular to FIG. 4, the central memory component CM 410 is the component of the central modelling system 210 that ensures the permanence of any stored data. For convenience the stored data is described herein as comprising data records, and this is intended to embrace the aforementioned data samples and any other data that may be stored by the system. Preferably, the CM 410 comprises one or more data storage mediums 411, which can store data, in particular data 320 that are compliant with data model DM2, e.g. DM2 type data records that have been created by the FE 301 from corresponding DM1 data. The central memory component CM 410 exposes a data storage system interface 420 to give access to the data storage medium 411. The data storage interface 420 comprises a storage interface 421 which can be used to store in the data storage medium 41 1 any number of data records that are compliant with the data model DM2, and a retrieve interface 422, which can be queried to retrieve data records stored in the data storage medium 411.

In the illustrated embodiment, interface component 510 differs from interface 420 in that component 510 is the interface of the whole central modelling system 210 whereas interface 420 is the interface of the central memory CM 410. In alternative embodiments, the central modelling system 210 may have more than one central memory CM 410, each one with its own semantic meaning, and all of them being accessible by interface component 510 via a respective interface component 420.

The preferred central memory component CM 410 also comprises a topological component TP 430 that is a data selector which exposes a topological structure service 431 that the data storage system interface 420 can use as required. The topological component TP 430 allows a flexible selection of data by implementing topological primitives, e.g. for assessing one or more topological relationship between data records. In preferred embodiments for any input data record *rᵢ* with data of type F, any function m, and a reference real number value *v*, the topological structure service 431 can access the data storage medium 411 and select and return all the records r whose data of type F (the first element of the data model DM₂) satisfies *m(r, ri)* ≤ *v*, and it may return a function to assess whether or not an F compliant data record lies within the set of all those points P for which *m(P, ri)* ≤ *v* is true. Function m may be calculation of the Euclidean distance, or more generally any function for determining a metric on the space of type F features, or any other function that facilitates data records being compared with each other. Typically the function m takes as input two data of type F and returns a real number. Hence, the topological component TP 430 may return data records that are within notional regions in the space of features of radius v centered in *ri.* Examples of possible outputs of the topological structure service 431 are illustrated as 432 in Figure 4. These represent a function that is evaluated as "true" within a specified range of a given point and "false" otherwise.

More generally, the TP 430 is configured to, for a given data record, retrieve multiple data records from the memory 411 that it deems to be similar to the given data record. The notion of similarity may be determined in terms of closeness in the space of features.

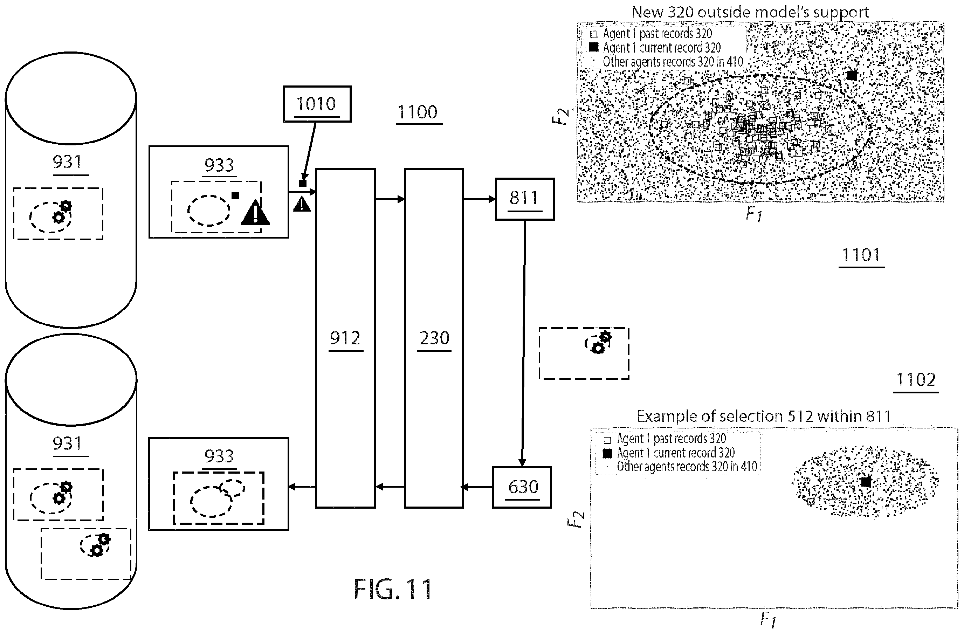

Referring now in particular to Figure 5, the data storage interface 510 of the central modelling system 210 provides access to the central memory component CM 410 and allows organization of the experience of the agents 910, as represented by data compliant with the data model DM1, in a consistent way that contributes to improving the autonomous agents' performance in terms of power, bandwidth and reliability, as will be apparent hereinafter with reference to the modelling interface in FIG. 8 and the communication between agents and the central modelling system in FIG. 10 and FIG. 11.

The data storage interface 510 includes the data logging interface 511 for storing data in the central memory component CM 410, and the data retrieval interface 512 for retrieving data from the central memory component CM 410. The preferred data logging interface 511 workflow is now described with reference to FIG. 5. Each data record 310 that is compliant with the data model DM1 that the data logging interface 511 is requested to store is passed to the feature extractor component FE 301 which evaluates its features (i.e. determines one or more features of the data record 310 by performing any suitable feature extraction data processing) and returns (creates) a corresponding DM₂ compliant record 320 comprising the same DM1 compliant record but further including the determined features (shown as F1 and F2 in FIG. 3) of data type F. The new DM2 record 320 is then sent to the storage interface 421 of the central memory component CM 410 and stored in the data storage medium 411.

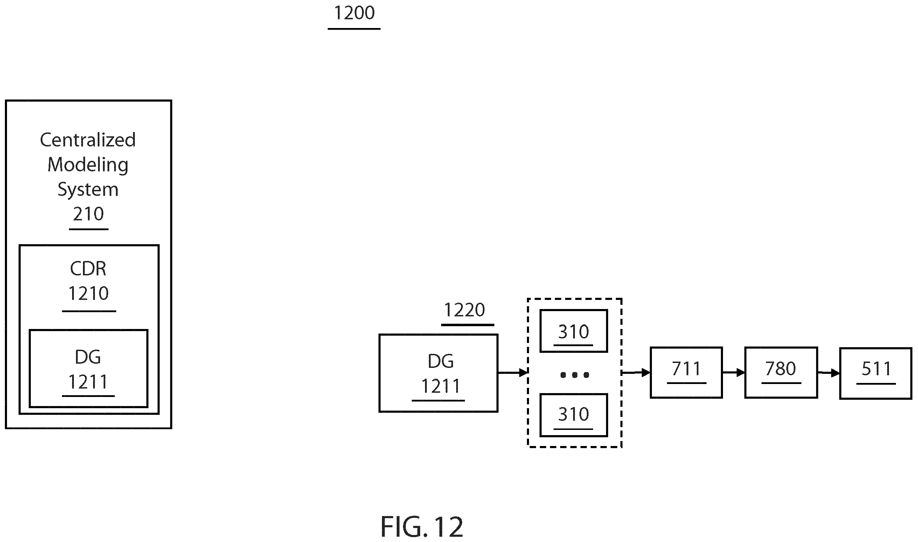

The preferred data retrieval interface workflow is now described with reference to FIG. 5. Each request for data is performed by providing one or more samples of a DM₁ compliant record 310 (only one shown in FIG. 5) that is representative of a context of interest to the feature extractor component FE 301. The or each sample of the DM1 compliant record may be provided by any one of the agents 901, for example an agent that is requesting a new model, or an agent requesting a new model and from process 1220 of Figure 12. The context of interest is determined by the agents' requests. In any event, the FE 301 evaluates the features of the or each record 310 and returns (creates) a corresponding DM₂ compliant record 320 comprising the same record but further including the features of type F. The new DM2 record 320 is then sent to the retrieve interface 422 of the central memory component CM 410, which accesses the topological structure service 431, which in turn selects all the records r320 stored in the data storage medium 411 whose feature(s) fᵣ satisfying the relation *m(fr, f)* ≤ *v*, (which for the purposed of illustrated are assumed to be the records 320 located within the broken line in FIG. 5). The selected records 320 are then returned by the retrieval interface 422 as response to the retrieve request.

Data records can be created by 2 different entities:
1) The agents 910 (see 1000, FIG. 10)
2) A Data Generator DG 1211 within a Continuous Data Revision 1210 functionality (see FIG. 12)

Records from the agents 910 are generated in the real world, i.e. the environment in which the agent 910 operates. Records from the DG 1211 are synthetically generated by the central modelling system 210 to enrich the global knowledge. For this reason, these data are preferably verified by exploiting the functionalities of the BDPSS 710 (see process 1220 of FIG. 12).

Retrieve requests are mainly handled within the central modelling system 210. In the preferred embodiment, agents 910 request new models rather than new data. Nevertheless, the central modelling system 210 exposes retrieval interface 512 which can be used to access the memory 410.

When multiple agents 910 send their DM1 compliant data to the central modelling system 210 by means of the data logging interface 511, the central memory CM 410 organizes (advantageously according to the semantics of the data as represented by the extracted features) the received data in a manner that is compliant with the operation of the topological structure service 431 so that any stored data records can be retrieved together regardless of which agent 910 originally created the data. This organisation allows data, and thus experiences, to be shared amongst agents 901.

It is noted that while all data provided by the agents 901 is DM1 compliant, the respective T1 (and/or T2 type as applicable) type data for each agent may be different. For example, in home automation:
- a thermostat (being an agent 901) may send T1 type data comprising any one or more of: device kind, measured temperature, time of the day; and T2 type data in the form of a Boolean flag for heater on or heater off;
- a sensor (being an agent) for an open window may send data T1 type data comprising any one or more of: device kind, a Boolean flag for window opened or window closed, and Time of the day, but no T2 data.

In both cases the agent 901 sends data which is DM1 compliant.

Referring now to FIG. 6, the modelling engine component ME 610 is described in more detail. In a simple embodiment, the ME 610 exposes a general-purpose data modelling system comprising one or more model trainer component MT 620. The model trainer component MT 620 provides functionality, exposed by a model trainer interface 621, for finding the parameters of a parametric model that suits, or fits, any given set of data. To this end, the model trainer component 620 may take as input:
310: a set of one or more data records that are compliant with data model DM₁;
622: a parametric model Mp with one or more parameters p, with Mp comprising a map of elements of the data type T₁ to elements of the data model DM₁, which may change its behaviour in accordance with the values of its parameters p;
623: a two-dimensional objective function O for comparing any two DM1 compliant data records and to produce a score representing the difference between the two records. The function is typically defined on the space of subsets of DM₁×DM₁;
625: a preference relation for the (real) scores (shown as "less than or equal to" in FIG. 6 but could be any other relational expression);
624: an initial assessment (values) *pi* of model Mp parameters p;
and it returns a final assessment *pf* 626 of model Mp parameters *p* such that the initial scores *si* of objective function O evaluated on the input set of DM₁ data records and on the results of the parametric model Mp, with initial parameters assessment pi, evaluated on each data of type T1 of the input set of DM₁ data records, are not preferred to the final scores *sf* of objective function O evaluated on the input set of DM1 data records and on the results of the parametric model Mp, with final parameters assessment pf, evaluated on each data of type T1 of the input set of DM1 data. In other words, the ME 601 ensures that the trained model has at least the same performance as the initial model. Preferably, the ME 601 ensures that after a training phase, the trained model is an improvement over the previous or untrained model. For example, if the objective function is an evaluation of mean square error then a model is preferred to another one if it has lower error. Alternatively, if the objective function is an evaluation of overall accuracy then a model is preferred to another one if it has a higher accuracy.

More generally, the ME 601 fits the parameters of a parametric model on the available data in order to produce a trained model that performs better than the untrained one.

A non-exhaustive list of parametric model Mp examples include: neural networks, statistical models, probabilistic models, physical models, hidden Markov models, Markov chains, Parametric Planner Algorithms, manifold learning algorithms and dimensionality reduction.

FIG. 6 shows a trained model 630 that is a parametric model 622 along with an assessment of its parameters 624. The trained model 630 computes data 310 compliant with DM1 from input data 311 of type T1.

Referring now in particular to FIG. 7, the behaviour default prevention support system BDPSS 710 is accessible through the behaviour default prevention support system interface BDPSSI 711, which may be included in the behaviourally secure modelling system interface 230. The main purpose of the behaviour default prevention support system BDPSS 710 is to ensure the quality of the models (which in preferred embodiments are parametric computational models) that are generated within or otherwise used by the central modelling system 210, thus preventing sources of behavioural default due to usage of these models, and reducing the risk that either the environment is damaged by the agents 910, or that the system functionalities are compromised. It is noted that in some embodiments the BDPSS 710 may be omitted.

The preferred behaviour default prevention support system BDPSS 710 comprises the following four major components: a data default prevention component DDP 720, a data revision system DR 730, a modelling default prevention component MDP 740, and a model revision system MR 750. Both the DDP 720 and the MDP 740 execute automatized quality checks respectively on data sets and on trained models by means of a data quality component DQ 721 and a modelling quality component MQ 741 respectively. If one or more quality constraints dictated by the DDP 720 are not met, a request for data revision can be generated, conveniently by the DDP 720, which the data revision system DR 730 can then handle. How quality is assessed is dependent on the application. However, quality assessment may typically involve determining whether or not there are enough data to train a parametric model; determining if the retrieved data are relevant; and/or assessing if the parametric model is able to capture the relevant data complexity.

In FIG.7, process flow 780 is an example of a data revision request to the data revision system DR 730 through its data revision interface 731. Processing the request involves analysing samples (only one shown in flow 780) of DM₁ compatible data and is handled by a polling system PS 760 which, in the flow 780, passes the data to human field experts 771, who can revise the data and respond with new samples (only one shown in flow 780) of DM₁ compatible data. Alternatively or in addition, the revision may be performed by one or more expert computer system 772. The experts 771, 772, whether human or machine experts, may be referred to generally as domain experts 770, and form part of the polling system PS 760. In any event, actions that may be taken by the expert(s) 770 typically include revising and overriding the T₁ and/or the T₂ fields of at least one data sample, and/or to removing at least one data sample from the set.

Similarly, if one or more quality constraint dictated by the modelling default prevention system MDP 740 is not met, a request to the model revision system MR 750 can be generated, conveniently by the MDP 740, which the model revision system MR 750 can then handle. In FIG. 7, process flow 790 is an example of flow triggered by a request to revise a trained model. The request is made to the MR 750 via its interface 751. Processing the request involves analysing one or more model, in particular the model 622, and is handled by the polling system PS 760 which, as shown in the flow 790, passes the data to one or more domain expert 770, who/which can revise (or replace) the model(s) and respond with one or more revised model or a corresponding or compatible type. The preferred flow 790 is similar to flow 780 with the exception that the polling system PS 760 queries the experts 770 for the correctness of a model(s) that has already been trained and the experts 770 return a new (or revised) trained model. All the relevant information is given to the experts 770, preferably including all the input of a model trainer system and its outputs (shown as 622, 310, 623, 624 and 625 in FIG. 7). The experts 770 can then revise both the model and its trainer and the polling system 760 returns the revised trained model, conveniently via MRI 751.

FIG. 8 illustrates an example of the behaviourally secure modelling system interface 230. The behaviourally secure modelling interface 230 coordinates the functionalities of the centralized memory CM 410, the modelling engine ME 610, and of the behaviour default prevention support system 710 to produce models that are compliant with one or more requested behaviour standards. In particular, when the behaviourally secure modelling system interface 230 is asked to create a model based on a given set of data samples/records that are DM1 compliant *Iₜᵣ* 310 the following flow 800 of steps is generated:
1. the data retrieval interface 512 gets from the central memory CM 410 all the data samples 320 which are topologically close to *Iₜᵣ*;
2. the behavioural default prevention support system interface BDPSSI 711 is requested to judge the quality of data samples obtained at step 1 (using any one or more measures of quality as suits the application);
3. the data default prevention system DDP 720 evaluates the data samples by executing the data quality component DQ 721;
4. if the DDP 720 determines that the data samples are good (i.e. are deemed to meet one or more relevant quality constraint), then the next step is step 6, otherwise step 5 is performed;
5. flow 780 (FIG. 7) is performed to fix the or each data sample that is deemed not to meet the relevant quality constraint(s);
6. to be modelled, the data samples (including any fixed/revised data samples) are then passed to the modelling engine ME 61 0 through its data modelling system Interface 611 which calls the model trainer interface 621 of the model trainer MT 620;
7. the trained model is produced by the model trainer MT 620;
8. the behavioural default prevention support system interface BDPSSI 711 is requested to judge the quality of model obtained at step. 7;
9. the model default prevention component MDP 740 evaluates the trained model by executing the model quality component MQ 741;
10. if the MDP 740 assesses that the trained model is good (i.e. is deemed to meet one or more relevant quality constraint) then it is returned as an output (this is shown in FIG. 8 as trained parametric model 630 which comprises a parametric model Nq 622 and an assessment qₙ 624 of its parameters q);
11. If the trained model is not deemed to be good, flow 790 (FIG. 7) is executed and the resulting model is returned output (this is shown in FIG. 8 as trained parametric model 630 which comprises the parametric model Nq 622 and an assessment qn 624 of its parameters q).

The behaviourally secure modelling system interface 230 ensures that the resulting trained model is always compliant with the quality standards imposed by both the data default and modelling default prevention module and in so doing so it integrates the possibility to ask for further help to revise all the relevant steps.

In preferred embodiments, the central memory CM 410 ensures that, when a new model is generated then all, and only, the relevant data are used to train that model. This naturally constrains the computational complexity, which can result in a better performing model because of, for example, shorter training time, higher model confidence, and lower model complexity to fit the smaller training set. Since the source of the data is not relevant for their selection, experience sharing between agents 910 is naturally exploited, advantageously together with the information gained by the polling system 760. FIG. 12 shows how a continuous data revision component CDR 1210 can optionally be included in the central modelling system 210 to continuously retrieve information from the polling system 760 to enrich, consolidate and validate agents' 910 direct experience.

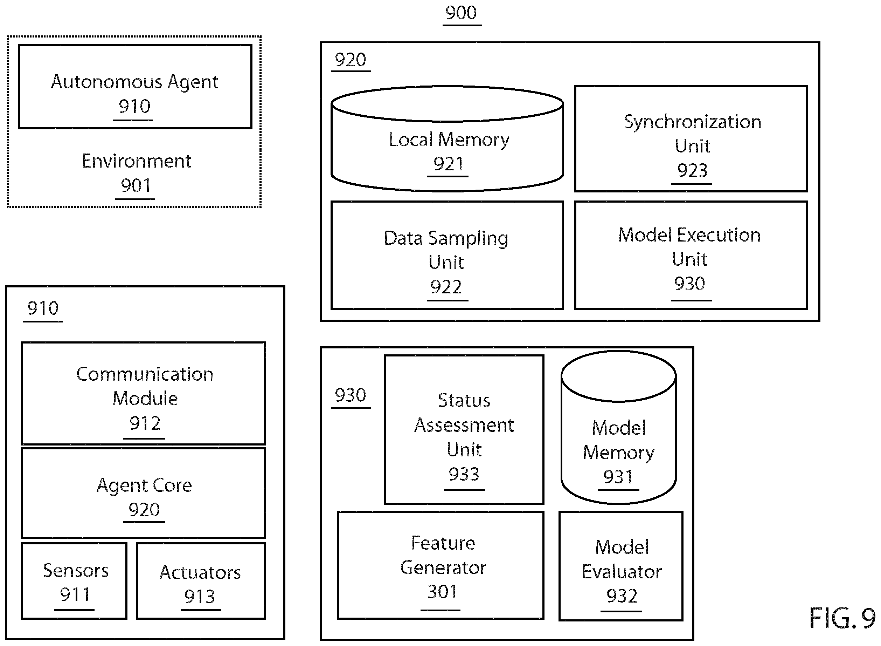

FIG. 9 illustrates an exemplary embodiment of the, or each, autonomous agent 910. Each autonomous agent 910 comprises a system or device comprising one or more sensors 911 for sensing one or more aspect of the respective environment 901 in which it performs. Each agent 910 typically also includes a core 920 (e.g. comprising a suitably programmed or configured computing device or other processing device) in which all its logic (functionality) is implemented and executed. A communication module 912 is provided for interaction with the central modelling system 210 (via CB 211 in the present example). Each agent 910 may also include one or more output devices 913 (shown as actuators 913 in FIG. 9) for interacting with the environment, e.g. for causing one or more respective effect on the environment.

In this context, the environment 901 may comprise a union of everything which is exogenous with respect to the respective autonomous agent 910, and which can directly or indirectly influence or be influenced by agent's sensors 911 or actuators 913. The environment 901 may change over time, and a purpose of the autonomous agent 910 may be to pursue its goal while adapting to environment changes.

The sensors 911 can be any kind of device and/or software which can sense one or more relevant characteristic of, or from, the environment from which corresponding data (e.g. one or more data samples) representative of, or derived from, the sensed characteristic(s) are produced (either by the sensor itself or the core 920), the or each relevant characteristic being needed by the agent 910 to understand the environment as per the model that it is being used to implement. In this context, the relevant data samples may not necessarily comprise raw data but may instead or in addition comprise processed data. Examples of sensors 911 include temperature sensors, light sensors, cameras, electrodes, sound sensors, current sensors, voltage sensors, pressure sensors, proximity sensors, IR sensors, UV sensors, touch sensors, gas sensors, chemical sensors, vibration sensors, flow sensors, radiation sensors, motion sensors and force sensors. Each agent 910 may have the same or different sensors as suits the application and/or the environment.

The output devices 913, when present, may comprise any device and/or software that enables the agent 910 to modify or otherwise interact with the environment. Examples of output devices 913 include electrodes, cameras, heaters, audio source, light source, radiation source, mechanical actuators, electrical actuators, chemical actuators, speakers, VDUs or transducers. Each agent 910 may have the same or different output devices as suits the application and/or the environment.

The preferred communication module 912 can communicate bi-directionally with the central modelling system 210 via communication channels supported by the CB 211, and typically includes equipment for ensuring secrecy and reliability of such communications.

The agent core 920 is typically embodied by a computing device and comprises a local memory 921, a data sampling unit 922, a model execution unit 930 and a synchronization unit 923. The local memory 921 may be any physical device that can store data and then can be queried to retrieve those data. The data sampling unit 922 typically comprises a suitably programmed or configured device and/or software for capturing data samples using the sensor(s) 911. The data samples may be stored in the memory 921. Preferably, for each new data sample that it generates, the sampling unit 922 can assess whether that data sample is worthy to be recorded within the local memory 921 or not.

The synchronization unit 923 generates data synchronization requests by, or in response to, which any data samples stored in the local memory 921 are sent to the central modelling system 200. The data sample transfer is handled then by the communication module 912, as illustrated by the schema of FIG. 10.

The preferred model execution unit 930 comprises a feature extractor FE 301, a model memory 931, a model evaluator 932 and a status assessment unit 933. The model evaluator 932 may comprise any device (typically a suitable programmed or configured computer or other processing device) that is able, for any one or more inputs, to execute a computational, or data, model and compute its output(s).

The feature extractor FE 301 extracts from a data record/data sample the or each the relevant features, which are then used by the status assessment unit 933 to predict if (at least in the near feature) the environment 901 will be well modelled by the current model, i.e. the model that is executed by the model execution unit 930. In the event that the status assessment unit 933 predicts that the performance of the current model is below, or will drop below, one or more performance levels, then it initiates a model update request, illustrated in FIG. 11, which is ultimately handled by the communication module 912, to the central modelling system 210 in order that a new mode be provided to the agent 910 by the system 210. If the model update cannot be satisfied, then the status assessment unit 933 may cause the agent 910 to perform in a manner that is considered a priori safe, e.g. adopt a safe mode.

In FIG. 10, generally indicated as 1000, two different agents 910 are depicted, agent 1 and agent 2 respectively, each of which stores data records within their memory and then synchronizes with the centralised modelling system 210 using the interface 220. An example of a DM1 compliant record 310 is shown at 1010, which includes T1 type data 311 comprising sensor's data and/or agent status, and type T2 data 312 comprising agent's action (for example).

Generally indicated as1020 is a conceptual representation of the CM 410 organized according to the values within transformed F type data 321 (being part of a DM2 compliant record 320) that comprises, in this example, two numerical features: F1 and F2. In 1020, DM2 compliant data records 320 generated by both agent 1 and agent 2 are mixed, with respect to their features, with all the DM2 compliant data records 320 received by all the other agents in the system. This is the base for sharing the experience through models which is illustrated in more detail in Fig 11.

FIG. 10 illustrates that the agents 910 interact with the central modelling system 210 by means of the interface 220. Their data sampling units 922 store in their respective memories data records 310 which are compliant with model DM1. In this example, the type T1 data 311 comprises sensed data 1001 and agent status data 1002, while T2 type data 312 comprises agent action data 1003. The data records 1010/310 are retrieved from agent memory 921 by the unit 923 and sent to the central monitoring system 210 by the communication module 912 via the interface 220. This triggers the flow 511 (FIG. 5) which stores the values in the CM 410. At 1020 it is shown by way of example how the DM2 compliant data records 320 generated by both agents 910 are organized within the CM 410 according to their features 321.

In FIG. 11, generally indicated as 1100, it is shown how an agent's model may be updated through the shared experience of all of the other agents in the system.

FIG. 11 also provides two graphical examples of an agent's data records. The first example 1101 depicts a current DM2 compliant data record 320 of the agent that is unsupported by the computational model being implemented by the agent 910. The second example 1102 depicts the records 320 retrieved by interface 512 as per process 800 of FIG. 8, where only the "relevant" DM2 compliant records 320 are retrieved. From this example it may be seen how the data records 320 generated by agents other than the one under consideration are used to train its model, thus exchanging experience between agents without exchanging data records between agents. Moreover, only the data records 320 which are similar (relevant) to the current record are used to train a new model thus saving time and computational power.

When the status assessment module 933 of an agent 910 recognizes that what the agent is sensing are not supported by the computational model(s) 630 which are in agent's model memory 931, it requests an updated model via its communication module 912 and the interface 230. This initiates the flow 800 of FIG. 8, which creates a new computational model 630, which is preferably verified in all its steps. The new model 630 can then be sent back to the agent, which stores the new model 631 in its model memory 931, and updates the status assessment module 933.

At 1010 the data record 310 is depicted within the CM 410, as result of the agent sending the DM1 data record 310 triggered by module 933. In this picture, the warning condition detected by the agent has a clear correspondence within the memory 410.

The illustration 1102 highlights the result of the topological query within flow 800 where only the data records 320 in CM 410 similar to the agent's current record 320 are selected to train a new model 630. Illustration 1102 depicts also that the data used to produce the new model, because they are relevant for the current status of the agent, have not necessarily been generated by the agent itself.

As a result of the topological organization of the CM 410, each agent 910 receives computational models that are appropriate for the environment that the respective agent is truly sensing. This allows constraint of the computational complexity of the models, specializing each agent to its environment, and efficiently sharing among agents only experience and not data records.

With reference in particular to FIG. 12 the continuous data revision component CDR 1210 may comprise a data generator DG 1211. The continuous data revision component CDR 1210 on a regular basis scans the central memory CM 410 searching for possible sources of problems to eventually address by means of the data revision system DR 730. The data generator DG 1211 can generate data records that are DM₁ compliant and similar (i.e. statistically close by whatever metric is being used) to the relevant data record in the relevant portion of the central memory 410. To this end the DG 1211 may be configured to transform type F data into DM1 compliant records 310.

In FIG. 12 process flow1220 shows how the data generator DG 1211 may generate data records 310 compliant with the DM1 data type, which are then be passed to data revision system DR 730 through its interface DRI 731. Data are then passed to the polling system 760 for revision by triggering a 780 flow. Finally, the revised data, originally generated by the data generator DG 1211, are added to the central memory CM 410. Hence, the central memory CM 410 content can be continuously enriched with trusted data. Even if data samples do not come from any agent's sensors, they have been revised by the polling system 760 and so, their feasibility and correctness has been positively assessed.

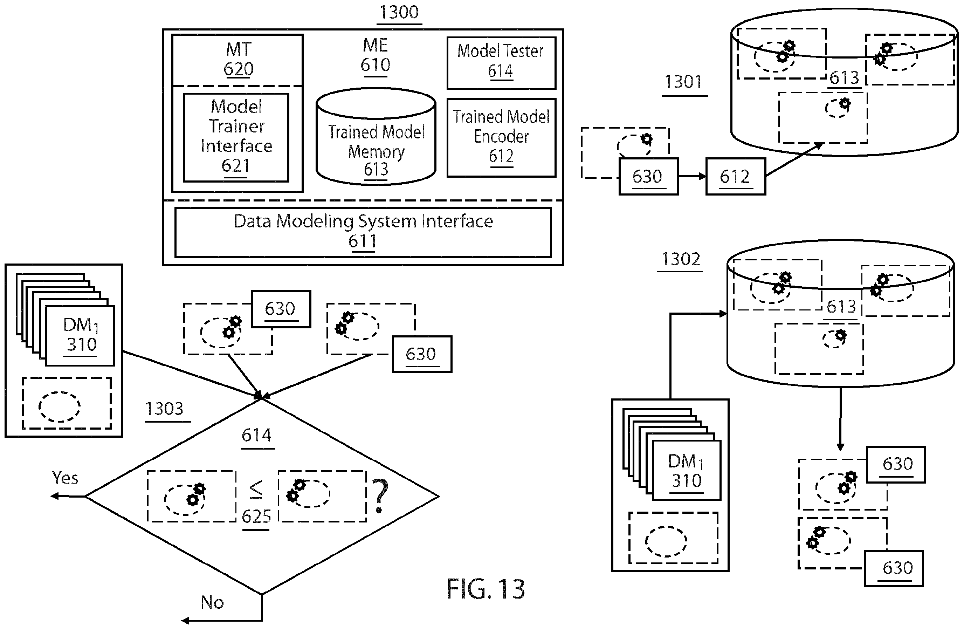

With reference to FIG. 13 the modelling engine ME 610 may optionally include a trained model encoder component 612, a trained model memory 613 and a model tester 614. The trained model encoder component 612 extracts relevant features to identify a training made by the modelling engine ME 610 in such a way that it can be stored in the trained model memory 613 and retrieved in accordance with its features. The model tester 614 can benchmark a new trained model against old trained models having intersecting supports. The purpose of the memory 613 is to store trained models and organize them in such a way that it simplifies the identification of previously trained models on data sets which are close to the actual ones 1302.

The set of features that achieve this functionality may comprise but is not limited to:
1) The parameters of the topological query which produced the data set
2) Some hash function of the data set
3) Statistics on the model's performance, e.g. the expected error

Each model is advantageously trained on a subset of the whole memory. The subset is identified by the flow 800 which ultimately uses the topological module to describe it analytically as the set of all data records those satisfy m(*, fr) < v. This identifies the region of the memory 410 which the model 630 is meant to model.

In FIG. 13, 1301 shows a trained model 630 which is memorized within memory 613. The model encoder 612 has the same functionalities as the topological module 430 within the CM 410, but it is specialized to deal with trained models rather than data records. 1302 shows a functionality of the model's memory 613, which can be queried to retrieve the trained models 630. 1303 shows the model tester module that can assess which of the two input trained models 630 is better to model the input data records 310.

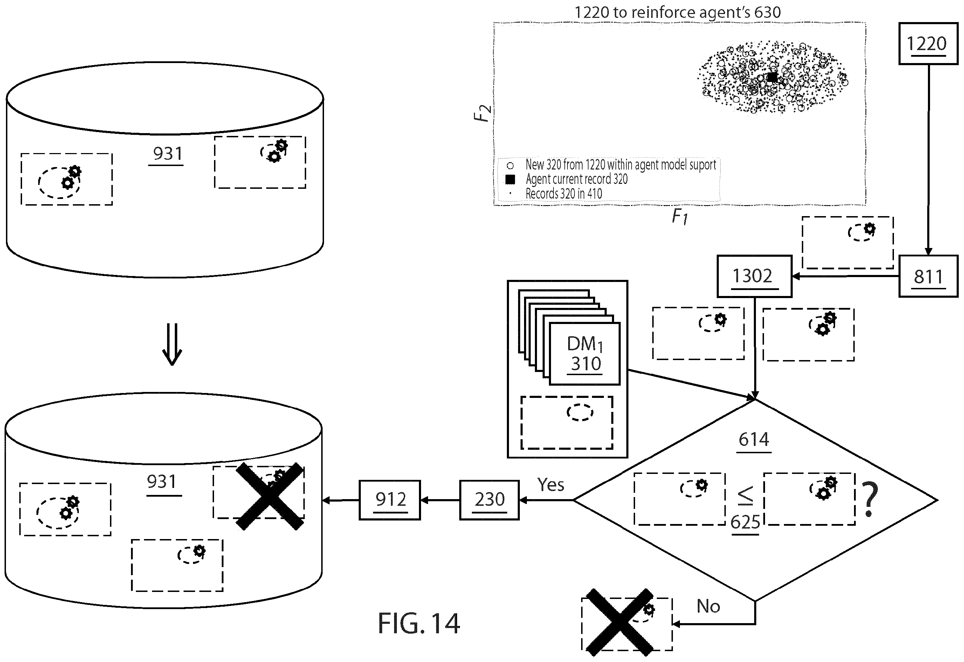

With reference in particular to FIG. 14 continuous data revision CDR used jointly with the extended modelling engine can generate better models independently of the agents' needs (new model requests) which can then be sent to the agents. FIG. 14 depicts new data records 320 generated by flow 1220 which affect the model 630 used by one agent 910 and if the new model, i.e the model trained also on the new data, is better than the old one then the new model is pushed to the agent and then substituted for the old one.

When new data records 320 are added to the CM 410 by means of process 1220, the centralised modelling system 210 identifies all the agents 910 that have a model which can be improved by considering these new data. The central modelling system 210 then computes new models 630 by means of process 800, and if they are an improvement on the ones which are hosted within the agents 910, then central modelling system 210 pushes them to the respective agents.

In cases where the central modelling system 210 must respond to a new model request within a fixed amount of time, agents are configured to adopt a safe mode if a response is not received within time. If the system 210 fails to provide a new model within the time constraints then the agent automatically switches to safe mode until the new model is returned.

Moreover, when needed by the application, the agent 910 can be directly controlled by the experts 771 within the polling system 760. The system 210 ensures that updating the agents is as safe as possible for their environment. However, in time critical applications the agents can be provided with a safe mode model, which may cause the agent to act in a conservative and not necessarily efficient way. Whenever the agents cannot perform the flow in Fig. 14 within the time constraints of the application then, the safe model is used.

It will be understood that methods and components described herein or methods and components otherwise embodying the invention may be implemented in software, firmware, hardware, or a combination thereof as is convenient. In one mode, the methods or components are implemented in software, as one or more executable program, and executed by one or more special or general purpose digital computer(s), such as a personal computer (PC; IBM-compatible, Apple-compatible, or otherwise), personal digital assistant, workstation, minicomputer, or mainframe computer. The components or steps of the methods may be implemented by a server or computer in which the software modules reside or partially reside.

Generally, in terms of hardware architecture, such a computer will include, as will be well understood by the person skilled in the art, a processor, memory, and one or more input and/or output (I/O) devices (or peripherals) that are communicatively coupled via a local interface. The local interface can be, for example, but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the other computer components.

The processor(s) may be programmed to perform the functions of the method or components as described above. The processor(s) is a hardware device for executing software, particularly software stored in memory. Processor(s) can be any custom made or commercially available processor, a central processing unit (CPU), an auxiliary processor among several processors associated with a computer, a semiconductor based microprocessor (in the form of a microchip or chip set), a macroprocessor, or generally any device for executing software instructions, a GPU, FPGA or artificial intelligence hardware.

Memory is associated with processor(s) and can include any one or a combination of volatile memory elements (e.g., random access memory (RAM, such as DRAM, SRAM, SDRAM, etc.)) and non-volatile memory elements (e.g., ROM, hard drive, tape, CDROM, etc.). Moreover, memory may incorporate electronic, magnetic, optical, and/or other types of storage media. Memory can have a distributed architecture where various components are situated remote from one another, but are still accessed by processor(s). The software in memory may include one or more separate programs. The separate programs comprise ordered listings of executable instructions for implementing logical functions in order to implement the functions of the modules. In the example of heretofore described, the software in memory includes the one or more components of the method and is executable on a suitable operating system (O/S).

The present teaching may include components provided as a source program, executable program (object code), script, or any other entity comprising a set of instructions to be performed by a computer. When a source program, the program needs to be translated via a compiler, assembler, interpreter, or the like, which may or may not be included within the memory, so as to operate properly in connection with the O/S. Furthermore, a methodology implemented according to the teaching may be expressed as (a) an object oriented programming language, which has classes of data and methods, or (b) a procedural programming language, which has routines, subroutines, and/or functions, for example but not limited to, C, C++, Pascal, Basic, Fortran, Cobol, Perl, Java, Javascript, Python, Go and Ada.

When the method or component is implemented in software, it should be noted that such software can be stored on any computer readable medium for use by or in connection with any computer related system or method. In the context of this teaching, a computer readable medium is an electronic, magnetic, optical, or other physical device or means that can contain or store a computer program for use by or in connection with a computer related system or method. Such an arrangement can be embodied in any computer readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be for example, but not limited to, an electronic, magnetic, optical, electromagnetic, infrared, or semiconductor system, apparatus, device, or propagation medium. Any process descriptions or components in the Figures, should be understood as representing modules, segments, or portions of code which include one or more executable instructions for implementing specific logic functions or steps in the process, as would be understood by those having ordinary skill in the art.

As used herein, the terms "computer-usable" and "computer-executable" as applied to for example instructions, files, modules, templates or any other component of the system, are intended to mean that the relevant component comprises one or more instructions that may be performed by a computer to implement the relevant function(s). The instructions may be suitable for direct use by a computer (e.g. machine code) or suitable for use by the computer after being compiled (e.g. source code).

## Claims

1. A computing system (100) comprising:
a computer-implemented central modelling system (210); and
a plurality of agents (910) in communication with said central modelling system (210) via a telecommunication network, each agent (910) being configured to operate in an environment (901) in accordance with at least one computational model and to send agent data (310) to said central monitoring system (210),
said central modelling system (210) comprising:
at least one data storage device (410) for storing
data representing the at least one computational model and
a plurality of data records (320),
a feature extractor (301) configured to extract features (321) from said agent data (310), and
a modelling engine (610) configured to train said at least one computational model using said data records (320),
wherein, upon receipt of said agent data (310) from any one of said agents (910) by said central modelling system (210), said central modelling system (210) is configured to create and store a corresponding data record (320), said data record (320) including said agent data (310) and at least one feature (321) extracted from said agent data (310) by said feature extractor (301),
and wherein, in response to a request from any one of said agents (910) for a new computational model, said central modelling system (210) is configured to send to the requesting agent (910) a trained computational model, said trained computational model comprising any one of said at least one computational model,
and wherein said central modelling system (210) is configured to determine, using the at least one feature (321) of the data record (320) for the agent data (310) from said requesting agent (910) and the at least one feature (321) of the other data records (320) created and stored by said central modelling system (210), which of said other data records (320) are similar to said agent data (310) from said requesting agent (910), and to train said trained computational model on the data records (320) that are determined by said central modelling system (210) to be similar to the agent data (310) received from said requesting agent (910).

2. The system of claim 1, wherein the at least one computational model comprises a parametric model with one or more parameters, and wherein to train the parametric model, said modelling engine (610) is configured to determine a respective value for the or each parameter using a plurality of said data records (610, 620), and wherein, preferably, said modelling engine is configured to determine the respective value for the or each parameter by comparing said data records (320), preferably two at a time, using an objective evaluation function.

3. The system of claim 2, wherein said trained computational model sent to said requesting agent (910) comprises data representing the respective parametric model and data indicating the, or each, determined parameter value for the parametric model.

4. The system of any preceding claim, wherein each instance of said agent data (310) comprises a first element (311) comprising data of a first type (T1) that is suitable for use as an input to said at least one computational model, and wherein each data record (320) stored by said central modelling system (210) comprises a first element (321) comprising data of a third type (F) and a second element, said second element comprising data of said first type (T1), wherein said data of said third type comprises data representing at least one feature of said data of said first type (T1), and wherein, upon receipt of each instance of agent data (310) from any one of said agents (910), said central modelling system (210) is configured to create a corresponding data record (320) in which said data of said third type (F) comprises data representing at least one feature of said data of said first type (T1) included in the first element of the respective instance of agent data (310), and in which said second element of said data record comprises said respective instance of agent data (310).

5. The system of any preceding claim, wherein said feature extractor (301) is configured to process said agent data (310) using one or more feature extraction algorithms to produce the at least one feature (321) for the respective instance of agent data (310).

6. The system of any preceding claim, wherein said at least one feature (321) extracted from said agent data (310) comprises data indicating at least one characteristic of the respective instance of agent data (310).

7. The system of any preceding claim, wherein one or more of said agents (910) comprise a computing device comprising at least one sensor (911) for sensing at least one characteristic of the environment (901), and wherein said agent data (310) comprises data indicative of the at least one sensed characteristic.

8. The system of any preceding claim, wherein one or more of said agents (910) comprise a computing device comprising at least one output device (913) for interacting with said environment (901).

9. The system of any preceding claim, wherein said agent data (310) comprises data indicative of a status of the respective agent (910).

10. The system of any preceding claim, wherein said agent data (310) comprises data indicative of one or more actions of the respective agent (910).

11. The system of any preceding claim further including a system (710) for controlling the quality of said at least one computational model, said quality control system (710) comprising:
a model quality assessment system (740) configured to determine if any one of said computational models meets one or more quality requirements; and
a model revision system (750) configured to revise or replace any one or more of said computational models,
wherein, upon determination by said model quality assessment system (740) that a computational model fails to meet one or more of said quality requirements, said quality control system (710) is configured to send
data representing said failed computational model to said model revision system (750) for revision or replacement, and to receive from said model revision system (750) a revised computational model or a replacement computational model.

12. The system of any preceding claim further including a system (710) for controlling the quality of said agent data (310) and/or at least part of said data records (320), said quality control system (710) comprising:
a data quality assessment system (720) configured to determine if any instance of said data meets one or more quality requirements; and
a data revision system (730) configured to revise or replace any one or more instances of said data,
wherein, upon determination by said data quality assessment system (720) that an instance of data fails to meet one or more of said quality requirements, said quality control system (710) is configured to send the failed data to said data revision system (730) for revision or replacement, and to receive from said data revision system (730) revised data or replacement data.

13. The system of any preceding claim, wherein at least one and preferably all of said agents (910) are configured to adopt a default computational model in the event that said central modelling system (210) fails to provide a new computational model within a time limit after being requested.

## Patentansprüche

1. Rechensystem (100), umfassend:
ein computerimplementiertes zentrales Modellierungssystem (210); und
eine Vielzahl von Agenten (910) in Kommunikation mit dem zentralen Modellierungssystem (210) über ein Telekommunikationsnetz, wobei jeder Agent (910) so konfiguriert ist, dass er in einer Umgebung (901) gemäß mindestens einem Rechenmodell arbeitet und Agentendaten (310) an das zentrale Überwachungssystem (210) sendet,
wobei das zentrale Modellierungssystem (210) umfasst:
mindestens eine Datenspeichervorrichtung (410) zum Speichern von Daten, die das mindestens eine Rechenmodell darstellen, und einer Vielzahl von Datensätzen (320),
einen Merkmalsextrahierer (301), der zum Extrahieren von Merkmalen (321) aus den Agentendaten (310) konfiguriert ist, und
eine Modellierungsmaschine (610), die dazu konfiguriert ist, das mindestens eine Rechenmodell unter Verwendung der Datensätze (320) zu trainieren,
wobei nach Empfang der Agentendaten (310) von einem der Agenten (910) durch das zentrale Modellierungssystem (210) das zentrale Modellierungssystem (210) konfiguriert ist, um einen entsprechenden Datensatz (320) zu erstellen und zu speichern, wobei der Datensatz (320) die Agentendaten (310) und mindestens ein Merkmal (321) beinhaltet, das von dem Merkmalsextrahierer (301) aus den Agentendaten (310) extrahiert wurde,
und wobei, als Reaktion auf eine Anfrage von einem der Agenten (910) nach einem neuen Rechenmodell, das zentrale Modellierungssystem (210) so konfiguriert ist, dass es an den anfragenden Agenten (910) ein trainiertes Rechenmodell sendet, wobei das trainierte Rechenmodell eines des mindestens einen Rechenmodells umfasst,
und wobei das zentrale Modellierungssystem (210) so konfiguriert ist, dass es unter Verwendung des mindestens einen Merkmals (321) des Datensatzes (320) für die Agentendaten (310) von dem anfordernden Agenten (910) und des mindestens einen Merkmals (321) der anderen Datensätze (320),
die von dem zentralen Modellierungssystem (210) erzeugt und
gespeichert werden, bestimmt, welche der anderen Datensätze (320) den Agentendaten (310) von dem anfordernden Agenten (910) ähnlich sind, und um das trainierte Rechenmodell auf die Datensätze (320) zu trainieren, die von dem zentralen Modellierungssystem (210) als den von dem anfordernden Agenten (910) empfangenen Agentendaten (310) ähnlich bestimmt werden.

2. System nach Anspruch 1, wobei das mindestens eine Rechenmodell ein parametrisches Modell mit einem oder mehreren Parametern umfasst, und wobei zum Trainieren des parametrischen Modells die Modellierungsmaschine (610) so konfiguriert ist, dass sie einen jeweiligen Wert für den oder jeden Parameter unter Verwendung einer Vielzahl der Datensätze (610, 620) bestimmt, und wobei die Modellierungsmaschine vorzugsweise so konfiguriert ist, dass sie den jeweiligen Wert für den oder jeden Parameter bestimmt, indem sie die Datensätze (320), vorzugsweise zwei auf einmal, unter Verwendung einer objektiven Bewertungsfunktion vergleicht.

3. System nach Anspruch 2, wobei das trainierte Rechenmodell, das an den anfordernden Agenten (910) gesendet wird, Daten umfasst, die das jeweilige parametrische Modell darstellen, sowie Daten, die den oder jeden bestimmten Parameterwert für das parametrische Modell angeben.

4. System nach einem vorhergehenden Anspruch, wobei jede Instanz der Agentendaten (310) ein erstes Element (311) umfasst, das Daten eines ersten Typs (T1) umfasst, die zur Verwendung als Eingabe für das mindestens eine Rechenmodell geeignet sind, und wobei jeder von dem zentralen Modellierungssystem (210) gespeicherte Datensatz (320) ein erstes Element (321), das Daten eines dritten Typs (F) umfasst, und ein zweites Element umfasst, wobei das zweite Element Daten des ersten Typs (T1) umfasst, wobei die Daten des dritten Typs Daten umfassen, die mindestens ein Merkmal der Daten des ersten Typs (T1) darstellen, und
wobei das zentrale Modellierungssystem (210) so konfiguriert ist, dass es bei Empfang jeder Instanz von Agentendaten (310) von einem der Agenten (910) einen entsprechenden Datensatz (320) erzeugt, in dem die Daten des dritten Typs (F) Daten umfassen, die mindestens ein Merkmal der Daten des ersten Typs (T1) darstellen, das in dem ersten Element der jeweiligen Instanz von Agentendaten (310) beinhaltet ist, und in dem das zweite Element des Datensatzes die jeweilige Instanz von Agentendaten (310) umfasst.

5. System nach einem vorhergehenden Anspruch, wobei der Merkmalsextraktor (301) so konfiguriert ist, dass er die Agentendaten (310) unter Verwendung eines oder mehrerer Merkmalsextraktionsalgorithmen verarbeitet, um das mindestens eine Merkmal (321) für die jeweilige Instanz von Agentendaten (310) zu erzeugen.

6. System nach einem vorhergehenden Anspruch, wobei das mindestens eine Merkmal (321), das aus den Agentendaten (310) extrahiert wurde, Daten umfasst, die mindestens ein Merkmal der jeweiligen Instanz von Agentendaten (310) anzeigen.

7. System nach einem vorhergehenden Anspruch, wobei einer oder mehrere der Agenten (910) eine Rechenvorrichtung umfassen, die mindestens einen Sensor (911) zum Erfassen mindestens eines Merkmals der Umgebung (901) umfasst, und wobei die Agentendaten (310) Daten umfassen, die das mindestens eine erfasste Merkmal anzeigen.

8. System nach einem vorhergehenden Anspruch, wobei einer oder mehrere der Agenten (910) eine Rechenvorrichtung umfassen, die mindestens eine Ausgabevorrichtung (913) zur Interaktion mit der Umgebung (901) umfasst.

9. System nach einem vorhergehenden Anspruch, wobei die Agentendaten (310) Daten umfassen, die einen Status des jeweiligen Agenten (910) anzeigen.

10. System nach einem vorhergehenden Anspruch, wobei die Agentendaten (310) Daten umfassen, die eine oder mehrere Aktionen des jeweiligen Agenten (910) anzeigen.

11. System nach einem vorhergehenden Anspruch, ferner beinhaltend ein System (710) zur Kontrolle der Qualität des mindestens einen Rechenmodells, wobei das Qualitätskontrollsystem (710) umfasst:
ein Modellqualitätsbewertungssystem (740), das so konfiguriert ist, dass es bestimmt, ob eines der Rechenmodelle eine oder mehrere Qualitätsanforderungen erfüllt; und
ein Modellüberprüfungssystem (750), das so konfiguriert ist, dass es eines oder mehrere der genannten Rechenmodelle überarbeitet oder ersetzt,
wobei das Qualitätskontrollsystem (710) nach der Bestimmung durch das Modellqualitätsbewertungssystem (740), dass ein Rechenmodell eine oder mehrere der Qualitätsanforderungen nicht erfüllt, so konfiguriert ist, dass es Daten, die das fehlgeschlagene Rechenmodell darstellen, zur Überarbeitung oder Ersetzung an das Modellüberprüfungssystem (750) sendet und von dem Modellüberprüfungssystem (750) ein überarbeitetes Rechenmodell oder ein Ersatzrechenmodell empfängt.

12. System nach einem vorhergehenden Anspruch, ferner beinhaltend ein System (710) zur Kontrolle der Qualität der Agentendaten (310) und/oder mindestens eines Teils der Datensätze (320), wobei das Qualitätskontrollsystem (710) folgendes umfasst:
ein Datenqualitätsbewertungssystem (720), das konfiguriert ist, um zu bestimmen, ob jede Instanz der Daten eine oder mehrere Qualitätsanforderungen erfüllt; und
ein Datenüberprüfungssystem (730), das konfiguriert ist, um eine oder mehrere Instanzen der Daten zu überarbeiten oder zu ersetzen,
wobei das Qualitätskontrollsystem (710) nach der Bestimmung durch das Datenqualitätsbewertungssystem (720), dass eine Instanz von Daten eine oder mehrere der Qualitätsanforderungen nicht erfüllt, so konfiguriert ist, dass es die fehlerhaften Daten zur Überarbeitung oder zum Ersetzen an das Datenüberprüfungssystem (730) sendet und von dem Datenüberprüfungssystem (730) überarbeitete Daten oder Ersatzdaten empfängt.

13. System nach einem vorhergehenden Anspruch, wobei mindestens einer und vorzugsweise alle Agenten (910) so konfiguriert sind, dass sie ein Standardrechenmodell übernehmen, falls das zentrale Modellierungssystem (210) nicht innerhalb eines Zeitlimits nach Aufforderung ein neues Rechenmodell bereitstellt.

## Revendications

1. Système informatique (100) comprenant :
un système de modélisation central mis en œuvre par ordinateur (210)□; et
une pluralité d'agents (910) en communication avec ledit système de modélisation central (210) par l'intermédiaire d'un réseau de télécommunication, chaque agent (910) étant configuré pour fonctionner dans un environnement (901) conformément à au moins un modèle de calcul et pour envoyer des données d'agent (310) audit système de surveillance central (210),
ledit système de modélisation central (210) comprenant :
au moins un dispositif de stockage de données (410) pour stocker des données représentant l'au moins un modèle de calcul et une pluralité d'enregistrements de données (320),
un extracteur de caractéristiques (301) configuré pour extraire des caractéristiques (321) desdites données d'agent (310), et
un moteur de modélisation (610) configuré pour entraîner ledit au moins un modèle de calcul en utilisant lesdits enregistrements de données (320),
dans lequel, lors de la réception desdites données d'agent (310) de l'un quelconque desdits agents (910) par ledit système de modélisation central (210), ledit système de modélisation central (210) est configuré pour créer et stocker un enregistrement de données correspondant (320), ledit enregistrement de données (320) comprenant lesdites données d'agent (310) et au moins une caractéristique (321) extraite desdites données d'agent (310) par ledit extracteur de caractéristiques (301),
et dans lequel, en réponse à une demande de l'un quelconque desdits agents (910) pour un nouveau modèle de calcul, ledit système de modélisation central (210) est configuré pour envoyer à l'agent demandeur (910) un modèle de calcul entraîné, ledit modèle de calcul entraîné comprenant l'un quelconque dudit au moins un modèle de calcul,
et dans lequel ledit système de modélisation central (210) est configuré pour déterminer, en utilisant l'au moins une caractéristique (321) de l'enregistrement de données (320) pour les données d'agent (310) provenant dudit agent demandeur (910) et l'au moins une caractéristique (321) parmi les autres enregistrements de données (320) créés et stockés par ledit système de modélisation central (210), lesquels desdits autres enregistrements de données (320) sont similaires auxdites données d'agent (310) provenant dudit agent demandeur (910), et pour entraîner ledit modèle de calcul entraîné sur les enregistrements de données (320) qui sont déterminés par ledit système de modélisation central (210) comme étant similaires aux données d'agent (310) reçues dudit agent demandeur (910).

2. Système selon la revendication 1, dans lequel l'au moins un modèle de calcul comprend un modèle paramétrique avec un ou plusieurs paramètres, et dans lequel pour entraîner le modèle paramétrique, ledit moteur de modélisation (610) est configuré pour déterminer une valeur respective pour le ou chaque paramètre en utilisant une pluralité desdits enregistrements de données (610, 620), et dans lequel, de préférence, ledit moteur de modélisation est configuré pour déterminer la valeur respective pour le ou chaque paramètre en comparant lesdits enregistrements de données (320), de préférence deux à la fois, en utilisant une fonction d'évaluation objective.

3. Système selon la revendication 2, dans lequel ledit modèle de calcul entraîné envoyé audit agent demandeur (910) comprend des données représentant le modèle paramétrique respectif et des données indiquant la ou chaque valeur de paramètre déterminée pour le modèle paramétrique.

4. Système selon une quelconque revendication précédente, dans lequel chaque instance desdites données d'agent (310) comprend un premier élément (311) comprenant des données d'un premier type (T1) qui conviennent pour utilisation comme une entrée pour ledit au moins un modèle de calcul, et dans lequel chaque enregistrement de données (320) stocké par ledit système de modélisation central (210) comprend un premier élément (321) comprenant des données d'un troisième type (F) et un deuxième élément, ledit deuxième élément comprenant des données dudit premier type (T1), dans lequel lesdites données dudit troisième type comprennent des données représentant au moins une caractéristique desdites données dudit premier type (T1), et
dans lequel, lors de la réception de chaque instance de données d'agent (310) de l'un quelconque desdits agents (910), ledit système de modélisation central (210) est configuré pour créer un enregistrement de données correspondant (320) dans lequel lesdites données dudit troisième type (F) comprennent des données représentant au moins une caractéristique desdites données dudit premier type (T1) incluses dans le premier élément de l'instance respective de données d'agent (310), et dans lequel ledit deuxième élément dudit enregistrement de données comprend ladite instance respective de données d'agent (310).

5. Système selon une quelconque revendication précédente, dans lequel ledit extracteur de caractéristiques (301) est configuré pour traiter lesdites données d'agent (310) en utilisant un ou plusieurs algorithmes d'extraction de caractéristiques pour produire l'au moins une caractéristique (321) pour l'instance respective de données d'agent (310).

6. Système selon une quelconque revendication précédente, dans lequel ladite au moins une caractéristique (321) extraite desdites données d'agent (310) comprend des données indiquant au moins une caractéristique de l'instance respective de données d'agent (310).

7. Système selon une quelconque revendication précédente, dans lequel un ou plusieurs desdits agents (910) comprennent un dispositif informatique comprenant au moins un capteur (911) pour détecter au moins une caractéristique de l'environnement (901), et dans lequel lesdites données d'agent (310) comprennent des données indicatives de l'au moins une caractéristique détectée.

8. Système selon une quelconque revendication précédente, dans lequel un ou plusieurs desdits agents (910) comprennent un dispositif informatique comprenant au moins un dispositif de sortie (913) pour interagir avec ledit environnement (901).

9. Système selon une quelconque revendication précédente, dans lequel lesdites données d'agent (310) comprennent des données indicatives d'un état de l'agent respectif (910).

10. Système selon une quelconque revendication précédente, dans lequel lesdites données d'agent (310) comprennent des données indicatives d'une ou plusieurs actions de l'agent respectif (910).

11. Système selon l'une quelconque des revendications précédentes comprenant en outre un système (710) pour contrôler la qualité dudit au moins un modèle de calcul, ledit système de contrôle de qualité (710) comprenant :
un système d'évaluation de qualité de modèle (740) configuré pour déterminer si l'un quelconque desdits modèles de calcul satisfait à une ou plusieurs exigences de qualité□; et
un système de révision de modèle (750) configuré pour réviser ou remplacer un quelconque ou plusieurs desdits modèles de calcul,
dans lequel, lors de la détermination par ledit système d'évaluation de qualité de modèle (740) qu'un modèle de calcul ne satisfait pas à une ou plusieurs desdites exigences de qualité, ledit système de contrôle de qualité (710) est configuré pour envoyer des données représentant ledit modèle de calcul défaillant audit système de révision de modèle (750) pour révision ou remplacement, et pour recevoir dudit système de révision de modèle (750) un modèle de calcul révisé ou un modèle de calcul de remplacement.

12. Système selon l'une quelconque des revendications précédentes comprenant en outre un système (710) pour contrôler la qualité desdites données d'agent (310) et/ou au moins une partie desdits enregistrements de données (320), ledit système de contrôle de qualité (710) comprenant :
un système d'évaluation de qualité des données (720) configuré pour déterminer si une instance quelconque desdites données satisfait à une ou plusieurs exigences de qualité□; et
un système de révision de données (730) configuré pour réviser ou remplacer une quelconque ou plusieurs instances desdites données,
dans lequel, lors de la détermination par ledit système d'évaluation de qualité des données (720) qu'une instance de données ne satisfait pas à une ou plusieurs desdites exigences de qualité, ledit système de contrôle de qualité (710) est configuré pour envoyer les données défaillantes audit système de révision de données (730) pour révision ou remplacement, et pour recevoir dudit système de révision de données (730) des données révisées ou des données de remplacement.

13. Système selon une quelconque revendication précédente, dans lequel au moins un et de préférence tous lesdits agents (910) sont configurés pour adopter un modèle de calcul par défaut dans le cas où ledit système de modélisation central (210) ne parvient pas à fournir un nouveau modèle de calcul dans un délai après avoir été sollicité.
